# EUROPEAN PATENT APPLICATION

(11) **EP 3 919 361 A1**
(43) Date of publication of application: **08.12.2021**
(21) Application number: 20748973.3
(22) Date of filing: 17.01.2020
(51) Int. Cl.: B62K 11/00, B62K 11/02, B62M 6/50

(54) **HUMAN-MACHINE INTERACTION SOMATOSENSORY VEHICLE AND VEHICLE BODY, AND UPPER COVER AND SUPPORTING FRAMEWORK THEREOF**

(30) Priority: 02.02.2019 CN 201910108014; 10.05.2019 CN 201910389339; 10.05.2019 CN 201910389356; 10.05.2019 CN 201920671473 U; 01.11.2019 CN 201911063571
(71) Applicant: Hangzhou Chic Intelligent Technology Co., Ltd, Hangzhou, Zhejiang 310000 (CN)
(72) Inventor: YING, Jiawei, Hangzhou, Zhejiang 310000 (CN); XIAO, Keping, Hangzhou, Zhejiang 310000 (CN)
(74) Representative: Cabinet Chaillot
(86) International application number: PCT/CN2020/072697
(87) International publication number: WO 2020/156233

(57) **Abstract**

A human-machine interaction somatosensory vehicle and a vehicle body, an upper cover, and a supporting frame thereof are provided. The human-machine interaction somatosensory vehicle includes the vehicle body and wheels (1) mounted on the vehicle body. The vehicle body includes the supporting frame (8), a control board (11), sensors, a battery (7), and pedal components. The wheels (1) are mounted on the supporting frame (8). The pedal components are mounted above the supporting frame (8). The sensors are mounted below the pedal components. The battery (7) supplies power to the control board (11). The control board (11) controls the wheels (1) to rotate according to signals of the sensors. The human-machine interaction somatosensory vehicle has a simple and reliable structure, few parts, and low manufacturing cost.

## Description

### BACKGROUND

### Technical Field

The disclosure relates to a balance vehicle, and in particular to a human-machine interaction somatosensory vehicle and a vehicle body, an upper cover, and a supporting frame thereof.

### Description of Related Art

The human-machine interaction somatosensory vehicle is also referred to as an electric balance vehicle or a smart thinking vehicle, and the operating principle is mainly based on a basic principle known as "dynamic stability", which uses a gyroscope and an acceleration sensor inside a vehicle body to detect changes in posture of the vehicle body and uses a servo control system to accurately drive a motor to perform corresponding adjustments to maintain the balance of the system.

Existing human-computer interaction somatosensory vehicles are generally divided into two types: with operating rods and without operating rods. For the human-computer interaction somatosensory vehicle with the operating rod, the specific operation control of the forward, backward, and steering of the human-computer interaction somatosensory vehicle are all controlled by the operating rod. For the human-machine interaction somatosensory vehicle without the operating rod, the forward and backward of the human-machine interaction somatosensory vehicle are controlled by the tilt of the entire human-machine interaction somatosensory vehicle, and the steering is implementing by stepping the feet of the user on pedal platforms and controlling through the relative difference between rotational angles of the two pedal platforms. The two-wheeled human-machine interaction somatosensory vehicle without the operating rod is mainly represented by the two-wheeled self-balance human-machine interaction somatosensory vehicle disclosed in Patent application No. CN201410262108.8. An inner cover in the balance vehicle includes a left inner cover and a right inner cover that are symmetrically disposed, and the left inner cover is rotatably connected relative to the right inner cover. However, by adopting the relative rotation of the left and right pedal parts to control the rotation of the vehicle, the structure is more complex, many parts are required, and the manufacturing cost is higher.

Patent documents with publication numbers CN108297999A, CN106627895A, CN108725648A, CN106560386A, and CN105416486A, and the series of application documents thereof disclose a human-computer interaction somatosensory vehicle, which detects changes in the force received by positions stepped by a front portion of a left foot, a heel portion of the left foot, a front portion of a right foot, and a heel portion of the right foot through a pressure sensor when the user stands on a pedal to obtain the driving operation intention of the user, that is, the steering is implemented through differences in pressure between the two feet. However, during actual implementation processes of the solutions disclosed by the patent documents, there are still issues such as complex structure, many parts, complicated assembly, and high manufacturing cost.

### SUMMARY

In order to solve the above technical issues, the objectives of the disclosure are to provide a human-machine interaction somatosensory vehicle with simple and reliable structure and low manufacturing cost, a vehicle body, an upper cover, and a supporting frame thereof.

In order to achieve the above objectives, the disclosure adopts the following technical solutions.

A human-machine interaction somatosensory vehicle includes a vehicle body and wheels mounted on the vehicle body. The vehicle body includes a supporting frame, a control board, sensors, a battery, and pedal components. The wheels are mounted on the supporting frame. The pedal components are mounted above the supporting frame. The sensors are mounted below the pedal components. The battery supplies power to the control board. The control board controls the wheels to rotate according to signals of the sensors.

Preferably, the vehicle body further includes an upper cover and a lower cover wrapped outside. The pedal components are plastic members integrally formed with the upper cover of the vehicle body.

Preferably, the supporting frame includes a wheel connecting portion for connecting with the wheels and supporting portions for supporting the pedal component. The wheel connecting portion and the supporting portions are integrally formed, or directly fixedly connected, or indirectly fixedly connected via another rigid component.

Preferably, the supporting frame has an integrally formed plate-shaped structure. The supporting frame is made of an aluminum profile.

Preferably, the pedal components are pedal portions integrally connected with an upper cover of the vehicle body.

Preferably, each of the pedal components is a pedal baseplate capable of independently moving and generating relative displacement changes relative to the supporting frame and an upper cover of the vehicle body. The pedal baseplate and the upper cover of the vehicle body are able to be connected through a flexible component or a flexible joint.

Preferably, an upper surface of each of the pedal components is adhered with an anti-slip sticker or an anti-slip mat.

Preferably, each sensor is a plate-shaped or sheet-shaped pressure sensor. The pressure sensor is disposed between the pedal component and the supporting frame. The pressure sensor includes front and rear end portions and a connecting portion connecting the front and rear end portions. The connecting portion is fixed on the supporting frame or to a bottom portion of the pedal component.

Preferably, the wheels adopt a hub motor. Wheel axles of the two wheels are respectively fixed to two ends of the supporting frame through fixing members. The wheel axles are mounted below the supporting frame. The supporting frame and the fixing members are provided with grooves coordinating with the wheel axles.

Preferably, an upper cover of the vehicle body is an integrally formed plastic member and includes left and right pedal portions. The left and right pedal portions are connected through an intermediate portion. Outer sides of the left and right pedal portions are respectively provided with wheel cover portions for covering the wheels.

Preferably, each of a front side and a rear side of a bottom portion of each of the pedal portions is provided with two pressure portions in contact with the pressure sensor to transmit pressure. Each of the front side and the rear side of the bottom portion of each of the pedal portions is provided with two positioning columns coordinating with the pressure sensors.

Preferably, a lower cover of the vehicle body is an integrally formed plastic member. The lower cover is fixed below the supporting frame. An upper cover is fixedly connected to the lower cover. The battery is mounted in a battery space of the lower cover below the supporting frame. The control board is mounted above the supporting frame.

Preferably, an upper cover is fixed on the supporting frame, and a lower cover is fixedly connected to the upper cover, or the upper cover and the lower cover are respectively fixedly connected to the supporting frame.

Preferably, the battery is mounted between the supporting frame and a lower cover, or the battery is mounted between the supporting frame and an upper cover. The control board is mounted between the supporting frame and the lower cover, or the control board is mounted between the supporting frame and the upper cover.

Preferably, an intermediate portion of an upper cover is arched upward to form an intermediate accommodating space thereunder. The control board is accommodated in the intermediate accommodating space and is fixed on the supporting frame.

Preferably, a front side or a rear side of the vehicle body is provided with a handle hole penetrating from top to bottom to form a handle in a middle of the front side or the rear side of the vehicle body.

Preferably, the supporting frame is integrated with a lower cover.

Preferably, the left and right wheels are mounted on the left and right ends of the supporting frame. The left and right pedal components are mounted above the supporting frame. The battery is mounted below the supporting frame. The left and right sensors are respectively mounted below the left and right pedal components. The battery supplies power to the control board. The control board is mounted with a gyroscope. The control board controls the two wheels to rotate according to signals of two sensors.

Preferably, the supporting frame has an integrally formed plate-shaped structure. The supporting frame is made of an aluminum profile.

Preferably, the supporting frame includes a wheel connecting portion for connecting with the wheels and supporting portions for supporting the pedal components. The wheel connecting portion and the supporting portions are integrally formed or fixedly connected to form the supporting frame. The left and right ends of the supporting frame are respectively provided with the wheel connecting portion. The left and right wheel connecting portions have a common wheel axis. The left and right supporting portions are disposed between the two wheel connecting portions. Each sensor is a plate-shaped or sheet-shaped pressure sensor disposed between each of the supporting portions and a respective one of the pedal components.

Preferably, the pressure sensor includes integrally formed or fixedly connected front and rear end portions and a connecting portion between the front and rear end portions. The connecting portion is fixed on the supporting frame. The front and rear end portions are suspended.

Preferably, the front and rear end portions of the pressure sensor form front and rear pressure sensing regions that are relatively independent from each other.

Preferably, the suspended front and rear end portions of the pressure sensor are respectively located on front and rear sides of the wheel axis of the two wheel connecting portions.

A human-machine interaction somatosensory vehicle includes a vehicle body and wheels mounted on the vehicle body. Preferably, the vehicle body includes a lower cover, a control board, sensors, a battery, and pedal components. The wheels are mounted on the lower cover. The pedal components are mounted above the lower cover. The sensors are mounted below the pedal components. The battery supplies power to the control board. The control board controls the wheels to rotate according to signals of the sensors.

Preferably, the lower cover is integrally formed by metal or other materials with supporting rigidity. Alternatively, the lower cover includes a main frame portion for load-bearing the vehicle body and an appearance portion exposed on an outer surface of the vehicle body. The main frame portion and the appearance portion are integrally formed by the same material or formed in one stage, formed in stages, or integrally assembled from segregation by adopting different materials. Each of the pedal components is a plastic member integrally formed with an upper cover of the vehicle body or a pedal baseplate capable of independently moving and generating relative displacement changes relative to the supporting frame and the upper cover of the vehicle body.

With the independent internal supporting frame, the upper cover is no longer used as a load-bearing component, so the upper cover of the vehicle body may be made of a plastic material or other materials with lower cost, lighter weight, and better decorative effect. Also, the center of gravity of the vehicle body is lowered, the structure is simplified, the number of parts is greatly reduced, the manufacturing cost is greatly reduced, the platform of the vehicle body is thinner to increase the ground clearance, the passability is improved, and the vehicle body is reduced in size, lighter, and easier to be carried and transported.

An upper cover of a human-machine interaction somatosensory vehicle is provided. The upper cover is provided with left and right pedal components. Preferably, the two pedal components are provided with a supporting frame thereunder. A sensor is provided between each pedal component and the supporting frame. Each of the pedal components includes a pedal part for the user to step on. When the pedal part bears a load, the pedal part transmits a weight to the supporting frame and triggers a sensor below the pedal part to generate an electrical signal.

A pressure sensor and the supporting frame are disposed below the pedal components of the upper cover of the vehicle body, so that the upper cover of the vehicle body is no longer used as a load-bearing component, so the upper cover of the vehicle body may be made of a plastic material or other materials with lower cost, lighter weight, and better decorative effect. Also, the center of gravity of the vehicle body is lowered, the structure is simplified, the number of parts is greatly reduced, the manufacturing cost is greatly reduced, the platform of the vehicle body is thinner to increase the ground clearance, the passability is improved, and the vehicle body is reduced in size, lighter, and easier to be carried and transported.

Preferably, the upper cover is fixed on the supporting frame.

Preferably, each of the pedal components is a plastic member integrally formed with the upper cover.

Preferably, each of the pedal components is a pedal baseplate capable of independently moving and generating relative displacement changes relative to the supporting frame and the upper cover. The pedal baseplate and the upper cover are able to be connected through a flexible component or a flexible joint.

Preferably, an upper surface of the pedal part of each of the pedal components is adhered with an anti-slip sticker or an anti-slip mat.

Preferably, the upper cover is an integrally formed plastic member and includes left and right pedal portions. The left and right pedal portions are connected through an intermediate portion. The pedal portions are the pedal components.

Preferably, outer sides of the two pedal portions are respectively provided with wheel cover portions for covering the wheels.

Preferably, each of the sensors is a plate-shaped or sheet-shaped pressure sensor. The pressure sensor includes front and rear end portions and a connecting portion connecting the two end portions. The connecting portion is fixed on the supporting frame or to a bottom portion of the pedal component. The front and rear end portions of the pressure sensor form relatively independent front and rear pressure sensing regions.

Preferably, left and right ends of the supporting frame are respectively mounted with a wheel. The left and right wheels have a common wheel axis. The suspended front and rear end portions of the pressure sensor are respectively located on front and rear sides of the wheel axis of the connecting portion of the two wheels. Each of a front side and a rear side of a bottom portion of each pedal portion is provided with two pressure portions in contact with the pressure sensor to transmit pressure. The front and rear pressure portions respectively correspond to the front and rear end portions of the pressure sensor. The front side and the rear side of the bottom portion of each pedal portion are respectively provided with a limiting structure coordinating to position with the front and rear end portions of the pressure sensor.

Preferably, each of the pressure portions has a block shape, a strip shape, a convex shape, a column shape, or a cone shape.

Preferably, the limiting structure is a positioning column, a positioning hole, or an edge limiting structure.

A human-computer interaction somatosensory vehicle includes an upper cover of the above human-computer interaction somatosensory vehicle.

Preferably, the human-computer interaction somatosensory vehicle further includes wheels, a control board, a battery, and pedal components. The wheels are mounted on wheel connecting portions at left and right ends of the supporting frame. The control board is fixed on the supporting frame. The pressure sensor is connected to the control board. The control board is mounted with a gyroscope. The control board controls the wheels to rotate according to the signals of the sensors. The battery is mounted below the supporting frame. The pedal components are mounted above the supporting frame.

A supporting frame of a human-machine interaction somatosensory vehicle includes a wheel connecting portion for connecting with wheels and supporting portions for supporting pedal components. The wheel connecting portion and the supporting portions are integrally formed or fixedly connected to form the supporting frame. Left and right ends of the supporting frame are respectively provided with the wheel connecting portion. The wheels respectively connected to the left and right wheel connecting portions have a common wheel axis. The left and right supporting portions are disposed between the two wheels. A plate-shaped or sheet-shaped pressure sensor is provided between each of the supporting portions and a respective one of the pedal components.

The independent supporting frame is adopted. The two ends of the supporting frame are connected to the wheels. The supporting frame supports the pedal components and the pressure sensors, so that the shell of the vehicle body is no longer used as a load-bearing component, and the shell of the vehicle body may be made of a plastic material or other materials with lower cost, lighter weight, and better decorative effect. The center of gravity of the vehicle body is lowered, the structure is simplified, the number of parts is greatly reduced, the manufacturing cost is greatly reduced, the platform of the vehicle body is thinner to increase the ground clearance, the passability is improved, and the vehicle body is reduced in size, lighter, and easier to be carried and transported. Under the premise of meeting the functional requirements of the human-computer interaction somatosensory vehicle, the product structure is optimized and the product production cost is reduced.

Preferably, the supporting frame has an integrally formed plate-shaped structure.

Preferably, the supporting frame is made of an aluminum profile.

Preferably, the pressure sensor includes integrally formed or fixedly connected front and rear end portions and the connecting portion between the two end portions. The connecting portion is fixed on the supporting frame. The front and rear end portions are suspended.

Preferably, the front and rear end portions of the pressure sensor form front and rear pressure sensing regions that are relatively independent from each other.

Preferably, the suspended front and rear end portions of the pressure sensor are respectively located on front and rear sides of the wheel axis of the two wheel connecting portions.

Preferably, the wheel connecting portions at the two ends of the supporting frame fix wheel axles of the wheels through fixing members. The wheel connecting portion of the supporting frame is provided with a groove coordinating with the wheel axles.

A human-machine interaction somatosensory vehicle includes a supporting frame of the above human-computer interaction somatosensory vehicle.

Preferably, the human-computer interaction somatosensory vehicle further includes wheels, a control board, a battery, and a pedal component. The wheels are mounted on wheel connecting portions at left and right ends of the supporting frame. The control board is fixed on the supporting frame. A pressure sensor is connected to the control board. The control board is mounted with a gyroscope. The control board controls the wheels to rotate according to a signal of the sensor.

Preferably, the battery is mounted below the supporting frame. The pedal components are mounted above the supporting frame.

A vehicle body of a human-machine interaction somatosensory vehicle is provided. The vehicle body includes a lower cover, a control board, sensors, a battery, and pedal components. Wheels are mounted on the lower cover. The pedal components are mounted above the lower cover. The sensors are mounted below the pedal components. The battery supplies power to the control board. The control board controls the wheels mounted on the vehicle body to rotate according to signals from the sensors.

Preferably, the lower cover is integrally formed by metal or other materials with supporting rigidity.

Preferably, the lower cover includes a main frame portion for load-bearing the vehicle body and an appearance portion exposed on an outer surface of the vehicle body. The main frame portion and the appearance portion are integrally formed by the same material or formed in one stage, formed in stages, or integrally assembled from segregation by adopting different materials.

Preferably, the vehicle body further includes an upper cover fixed on the lower cover. The control board, the sensor, and the battery are mounted between the upper cover and the lower cover.

Preferably, each of the pedal components is a plastic member integrally connected with the upper cover or a pedal baseplate capable of independently moving and generating relative displacement changes relative to the upper cover.

Preferably, the lower cover includes a wheel connecting portion for connecting with the wheels and supporting portions for supporting the pedal components. The wheel connecting portion and the supporting portions are integrally formed, or directly fixedly connected, or indirectly fixedly connected via another rigid component.

Preferably, the wheels adopt a hub motor. Wheel axles of the two wheels are respectively fixed on the lower cover through fixing members. The lower cover and the fixing members are provided with grooves coordinating with the wheel axles.

Preferably, each sensor is a plate-shaped or sheet-shaped pressure sensor. The pressure sensor is disposed between each of the pedal components and the lower cover. The pressure sensor includes front and rear end portions and a connecting portion connecting the front and rear end portions. The front and rear end portions are suspended. The connecting portion is fixed on the lower cover or is supported and limited by a protrusion on the lower cover.

Preferably, an upper cover of the vehicle body is an integrally formed plastic member and includes left and right pedal portions. The two pedal portions are connected through an intermediate portion. Outer sides of the two pedal portions are respectively provided with wheel cover portions for covering the wheels.

Preferably, each of a front side and a rear side of a bottom portion of each pedal portion is provided with two pressure portions in contact with the pressure sensor to transmit pressure. The bottom portion of each pedal portion is positioned to coordinate with the pressure sensor.

A human-machine interaction somatosensory vehicle includes a vehicle body of the above human-computer interaction somatosensory vehicle.

The disclosure adopts the above technical solutions. By adopting the independent internal supporting frame or the supporting frame integrated with the lower cover, the upper cover is no longer used as a load-bearing component, so the upper cover of the vehicle body may be made of a plastic material or other materials with lower cost, lighter weight, and better decorative effect. Also, the center of gravity of the vehicle body is lowered, the structure is simplified, the number of parts is greatly reduced, the manufacturing cost is greatly reduced, the platform of the vehicle body is thinner to increase the ground clearance, the passability is improved, and the vehicle body is reduced in size, lighter, and easier to be carried and transported. Under the premise of meeting the functional requirements of the human-computer interaction somatosensory vehicle, the product structure is optimized and the product production cost is reduced.

### BRIEF DESCRIPTION OF THE DRAWINGS

FIG. 1 is a perspective view (front side) of Embodiment 1 of the disclosure.
FIG. 2 is a perspective view (rear side) of Embodiment 1 of the disclosure.
FIG. 3 is an exploded view of Embodiment 1 of the disclosure.
FIG. 4 is a top view of Embodiment 1 of the disclosure.
FIG. 5 is an A-A cross-sectional view of FIG. 4.
FIG. 6 is a B-B cross-sectional view of FIG. 4.
FIG. 7 is a C-C cross-sectional view of FIG. 4.
FIG. 8 is a perspective view (with an upper cover removed) of Embodiment 1 of the disclosure.
FIG. 9 is a perspective view (with a lower cover removed) of Embodiment 1 of the disclosure.
FIG. 10 is a schematic view of an internal structure of an upper cover of the disclosure.
FIG. 11 is a schematic view of an internal structure of a lower cover of the disclosure.
FIG. 12 is a perspective view of Embodiment 2 of the disclosure.
FIG. 13 is an exploded view of Embodiment 2 of the disclosure.
FIG. 14 is a top view of Embodiment 2 of the disclosure.
FIG. 15 is a D-D cross-sectional view of FIG. 14.
FIG. 16 is an EE cross-sectional view of FIG. 14.

Reference numerals are explained as follows.

Wheel 1; wheel axle 101; front light 2; lower cover 3; lower connecting column 301; battery space 302; front light hole 303; speaker space 304; rear light hole 305; fixing column 306; upper cover 4; upper connecting column 401; intermediate portion 41; intermediate accommodating space 411; indicator light hole 412; pedal portion 42; pressure portion 421; positioning column 422; wheel cover portion 43; handle 44; handle hole 45; indicator light 5; rear light 6; battery 7; supporting frame 8; fixing member 9; pressure sensor 10; positioning hole 1001; control board 11.

### DETAILED DESCRIPTION OF DISCLOSED EMBODIMENTS

The embodiments of the disclosure are described in detail below. Examples of the embodiments are shown in the accompanying drawings. The same or similar reference numerals indicate the same or similar elements or elements with the same or similar functions. The embodiments described below with reference to the accompanying drawings are exemplary and are intended to explain the disclosure, but should not be construed as limiting the disclosure.

In the description of the disclosure, it should be understood that orientations or positional relationships indicated by terms such as "center", "longitudinal", "transverse", "length", "width", "thickness", "upper", "lower", "front", "rear", "left", "right", "vertical", "horizontal", "top", "bottom", "inner", "clockwise", and "counterclockwise" are based on orientations or positional relationships shown in the accompanying drawings and are only for the convenience of describing the disclosure and simplifying the description, rather than indicating or implying that an indicated device or element must have a specific orientation or be constructed and operated in a specific orientation, and therefore should not be construed as limiting the disclosure.

In addition, the terms "first" and "second" are only used for descriptive purposes and should not be understood as indicating or implying relative importance or implicitly indicating the number of indicated technical features. Therefore, features defined with "first" and "second" may explicitly or implicitly include one or more of the features. In the description of the disclosure, unless otherwise specified, "plurality" means two or more than two, unless specifically limited otherwise.

In the disclosure, unless otherwise clearly specified and limited, terms such as "mounted", "connected with", "connected to", "fixed", and "hold" should be understood in a broad sense, such as a fixed connection, a detachable connection, or an integral connection; a mechanical connection or an electrical connection; or a direct connection, an indirect connection through an intermediate medium, or an internal communication between two elements. For persons skilled in the art, the specific meaning of the above terms in the disclosure may be understood according to specific circumstances.

In the disclosure, unless otherwise clearly specified and limited, a first feature being "on" or "under" a second feature includes the first and second features being in direct contact or the first and second features not being in direct contact but being in contact through another feature therebetween. Moreover, the first feature being "on", "above", and "on top of' the second feature include the first feature being directly above and obliquely above the second feature or the first feature being at a higher level than the second feature. The first feature being "under", "below", and "underneath" the second feature include the first feature being directly below and obliquely below the second feature or the first feature being at a lower level than the second feature.

For the objectives, technical solutions, and advantages of the disclosure to be clearer, the following further describes the disclosure in detail with reference to the accompanying drawings and embodiments. It should be understood that the specific embodiments described here are only used to explain the disclosure, but not to limit the disclosure.

For the convenience of illustration, the disclosure takes a horizontal direction parallel to a straight direction of a human-machine interaction somatosensory vehicle as the front and rear direction, a horizontal direction perpendicular to the straight direction of the human-computer interaction somatosensory vehicle as the left and right direction, and a vertical direction perpendicular to the straight direction of the human-computer interaction somatosensory vehicle as the top and bottom direction.

### Embodiment 1

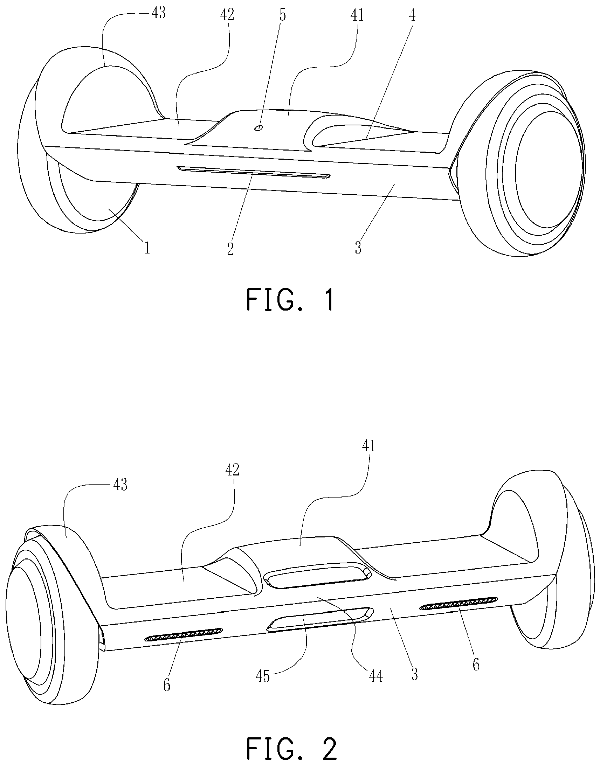

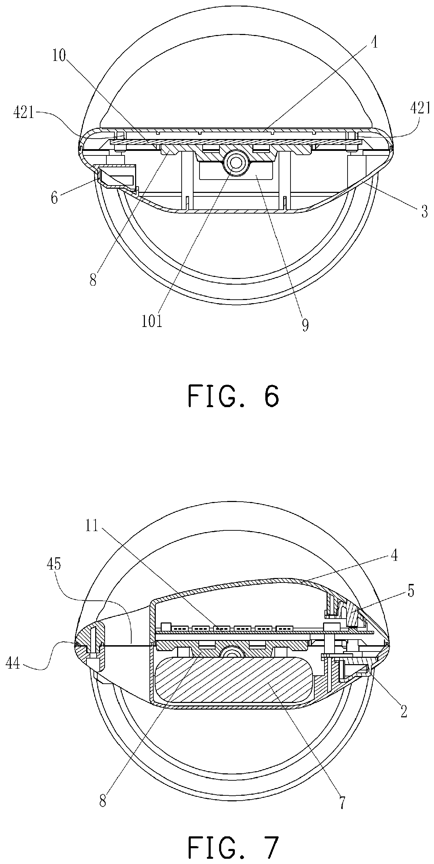

A human-machine interaction somatosensory vehicle as shown in FIG. 1 to FIG. 11 includes a vehicle body and wheels 1 mounted on the vehicle body. The vehicle body includes a supporting frame 8, a control board 11, sensors, a battery 7, and pedal components. The wheels 1 are mounted below or on two sides of the supporting frame. The pedal components are mounted above the supporting frame 8. The sensors are mounted below the pedal components. The battery 7 supplies power to the control board 11. The control board 11 controls the wheels 1 to rotate according to a signal from each of the sensors.

For the purposes of decoration and covering to protect internal parts, as shown in FIG. 1 and FIG. 2, the vehicle body further includes an upper cover 4 and a lower cover 3 wrapped outside.

The supporting frame is used for load-bearing the vehicle body and mounting the wheels. Therefore, the supporting frame includes a wheel connecting portion for connecting with the wheels and supporting portions for supporting the pedal components. The wheel connecting portion and the supporting portions are integrally formed, directly fixedly connected, or indirectly fixedly connected via another rigid component, thereby ensuring that the weight of the user is transmitted to the wheels via the pedal components and the supporting frame.

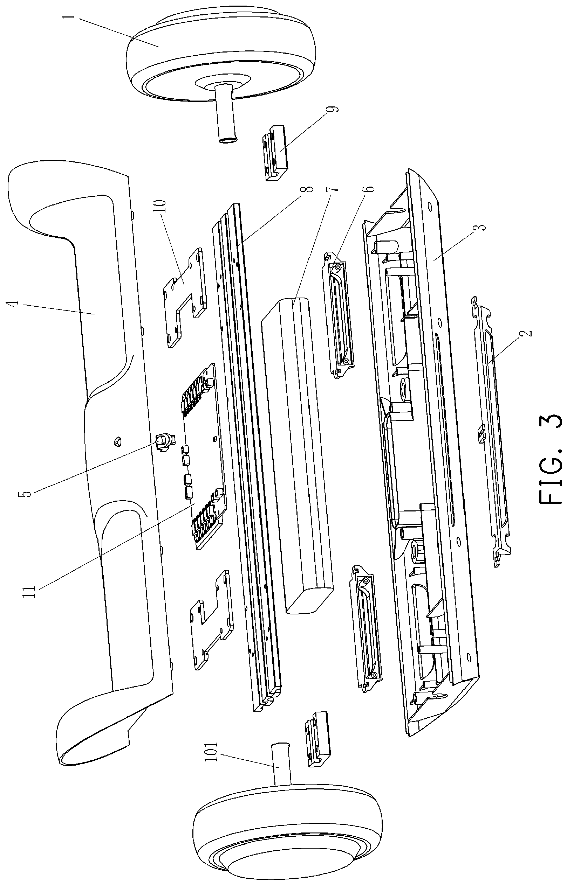

In the embodiment, as shown in FIG. 3, the wheel connecting portion and the supporting portions of the supporting frame 8 are integrally formed. The supporting frame 8 has an integral plate-shaped structure. In this way, the structure is simple, the processing is convenient, the manufacturing cost is low, and the plate-shaped structure is large in area, high in strength, and thin in thickness to facilitate the arrangement and mounting of parts, especially the mounting of the battery, so that the vehicle has a greater ground clearance and good passability.

In other embodiments, the supporting frame may be an integrally formed plate-shaped structure, rod-shaped structure, pole-shaped structure, tubular structure, block-shaped structure, cylindrical structure, or cover structure, or may be directly fixed or indirectly fixed into an integral structure after segregation forming. For example, the wheel connecting portion of the supporting frame has a plate-shaped structure, a rod-shaped structure, a pole-shaped structure, a tubular structure, a block-shaped structure, a cylindrical structure, or a cover structure. The supporting portion of the supporting frame has a plate-shaped structure, a rod-shaped structure, a pole-shaped structure, a tubular structure, a block-shaped structure, a cylindrical structure, or a cover structure. The wheel connecting portion and the supporting portions are directly fixedly connected or fixedly connected through a rigid component (the rigid component may also have one or more of a plate-shaped structure, a rod-shaped structure, a pole-shaped structure, a tubular structure, a block-shaped structure, a cylindrical structure, or a cover structure, such as all or a portion of the upper cover or the lower cover). The supporting frame may be hidden inside the vehicle body or may be fully or partially exposed outside the vehicle body. For example, the upper cover or the lower cover of the vehicle body may be used as the supporting frame or a portion of the supporting frame may be exposed on the upper cover or the lower cover of the vehicle body. The plate-shaped structure, the rod-shaped structure, the pole-shaped structure, the tubular structure, the block-shaped structure, the cylindrical structure, or the cover structure of the supporting frame may be an entirely complete integral structure or may be a frame structure formed by partially hollowing out or splicing or other similar structures.

In the embodiment, the supporting frame 8 is made of an aluminum profile, which has low cost and convenient processing.

The supporting frame is preferably made of a metal material. The metal material has good rigid support performance, which may not only mount and fix various components, but also effectively guarantee an explosion-proof power supply to improve safety. The metal material is preferably an aluminum material.

In other embodiments, all or a portion of the supporting frame may be a rigid component made of metal or may be made of a non-metallic material with a certain rigidity such as wood, plate, and hard plastic. The supporting frame may be formed in one stage or formed via multiple processing such as turning processing, milling processing, grinding processing, stretching processing, and welding processing.

The pedal components are used for the user to step on and transmit a weight to the supporting frame. Each of the pedal components includes at least a pedal part for the user to step on. When the user steps on the pedal part, the pedal part may directly contact the supporting frame (or indirectly connect the supporting frame through an intermediate component) to transmit the weight to the supporting frame. The supporting frame ultimately bears the weight.

In the embodiment, as shown in FIG. 1, FIG. 2, and FIG. 3, each of the pedal components is a pedal portion 42 that is integrally connected with the upper cover 4 of the vehicle body. Since the upper cover 4 for decoration and protection is generally made of plastic, the pedal portion 42 is also made of plastic, which has a simple structure, convenient assembly, low manufacturing cost, and pleasing appearance. When the user stands on the pedal portion of the upper cover, the weight thereof is transmitted to the sensor and the supporting frame through the elastic deformation of the pedal portion 42.

In other embodiments, each of the pedal components may be a pedal baseplate capable of independently moving and generating less relative displacement changes relative to the supporting frame and the upper cover of the vehicle body. The pedal baseplate and the upper cover of the vehicle body may be connected and sealed through a flexible component such as a rubber ring, or a pedal bottom portion and the upper cover of the vehicle body may be integrally connected through a flexible joint through a processing manner such as secondary forming, multiple forming, or insert injection.

In the embodiment, an anti-slip sticker or an anti-slip mat is disposed on an upper surface of each of the pedal portions 42. The anti-slip sticker or the anti-slip mat is fixed on each of the pedal portions 42 by pasting, which is convenient for mounting or replacement and low cost.

In other embodiments, an anti-slip structure (such as an anti-slip pattern) or an anti-slip component may also be disposed on each of the pedal components (the pedal portion 42) through forming processing, covering assembly, etc. The anti-slip component (such as the anti-slip sticker or the anti-slip mat) may be made of soft rubber or other materials to increase the wear resistance and friction of the pedal component, improve user comfort, and provide better waterproof and dustproof effects.

The sensor is used to sense changes in posture of the user to know the vehicle operation intention thereof. The sensor may be a pressure sensor, a capacitive sensor, a photoelectric sensor, and other sensors that can detect slight changes in shape or displacement of an object. The sensor includes a portion that can be connected with the pedal component, another portion that can be connected with the supporting component, and a signal output portion that is connected with the control board. The application principle and specific structure of such sensor on a somatosensory vehicle (or a balance vehicle) may be any of the solutions disclosed in the patent documents with publication numbers CN108297999A, CN106627895A, CN108725648A, CN106560386A, CN105416486A, etc. and the series of application documents thereof, and any other sensor that can achieve the above detection purpose.

In the embodiment, each of the sensors is a plate-shaped or sheet-shaped pressure sensor 10. The pressure sensor 10 is disposed between the pedal component (the pedal portion 42) and the supporting frame 8. A force-sensitive component of the pressure sensor 10 bears the weight while sensing changes in pressure. In this way, the cost is low, the thickness is thin, and the height of the vehicle body and the center of gravity of the vehicle body can be lowered to the greatest extent.

In other embodiments, each of the sensors may also only sense changes in shape or displacement of the pedal component or other intermediate components after bearing the weight, so that the sensor may be disposed at any suitable position around the pedal component and the supporting frame.

In the embodiment, each of the pressure sensors 10 is fixed on the supporting frame 8 through a fastener, so that the mounting is convenient and the detection is sensitive and reliable.

In other embodiments, the sensors may be respectively mounted on the pedal components (such as a bottom portion of each of the pedal portions 42). The sensors may also be partially mounted on the pedal components and partially mounted on the supporting frame. Persons skilled in the art may make reasonable arrangements according to the type and functional principle of the sensor.

In the embodiment, as shown in FIG. 3, FIG. 6, and FIG. 8, the pressure sensors 10 are disposed below the left and right pedal portions 42. Each pressure sensor 10 includes front and rear end portions and a connecting portion connecting the two end portions. The connecting portion is fixed on the supporting frame 8. The front and rear end portions extend out of the supporting frame 8 and are suspended. In this way, the front and rear end portions may sense different pressure information according to different forces of front and rear soles. In other words, front and rear sensing regions are equivalent to two sensors at different positions to respectively test the different forces of the front and rear soles. In other embodiments, each pressure sensor may also sense slight deformation or displacement of the pedal component relative to the supporting frame entirely. In other embodiments, each pressure sensor may have only one sensing region or more than two sensing regions.

A control device of the somatosensory vehicle is used for controlling and driving the wheels to move or rotate according to differences in force information between the sensing regions of the two pressure sensors, so as to implement steering. In other embodiments, the pressure sensor may also be used to sense whether there is a user on the pedal component, so as to control the start and stop of the wheels. With such arrangement, there is no need to separately configure a sensing switch, thereby simplifying the structure of the vehicle body. Of course, in other embodiments, the sensing switch may also be separately configured.

The human-machine interaction somatosensory vehicle may further include a position sensor (not shown) for sensing tilt information of the supporting frame relative to the wheels, that is, the tilt information of the supporting frame relative to the ground. With such arrangement, when the user and the supporting frame are entirely tilted forward, the position sensor senses the tilt and sends a signal to the control board. The control board controls and drives the wheels to move forward, which enables the entirety to tilt backward under the action of inertia to balance. Specifically, the position sensor includes a gyroscope, an acceleration sensor, and/or a photoelectric sensor.

The wheels are used for load-bearing and driving the vehicle body to move through being driven to rotate. The wheels may be mounted on two sides of the supporting frame or below the supporting frame. A driving implementation of the wheels may be driven to rotate by an external motor, that is, the wheel includes a wheel frame and a wheel axle that are fixedly connected. The wheel axle is rotatably mounted on the supporting frame and is transmission connected with a drive motor fixed on the supporting frame. In the prior art, the use of the external motor on the wheels causes the structure of the vehicle body to be complex and bulky. However, in the embodiment, since the supporting frame with the integral plate-shaped structure and the pressure sensor control structure are adopted, the parts of the entire vehicle are greatly reduced and the internal space of the vehicle body has more space, so that the drive motor of the wheels may be reasonably arranged. In another driving implementation of the wheels, the wheels are driven to rotate by a built-in motor, that is, a hub motor is adopted. The wheel frames and the wheel axles of the wheels are driven through the hub motor to implement relative rotation, so that the wheel axles may be directly fixed on the supporting frame, which has a simple and reasonable structure, may be conveniently and quickly mounted, occupies less internal space of the vehicle body, and has low manufacturing cost.

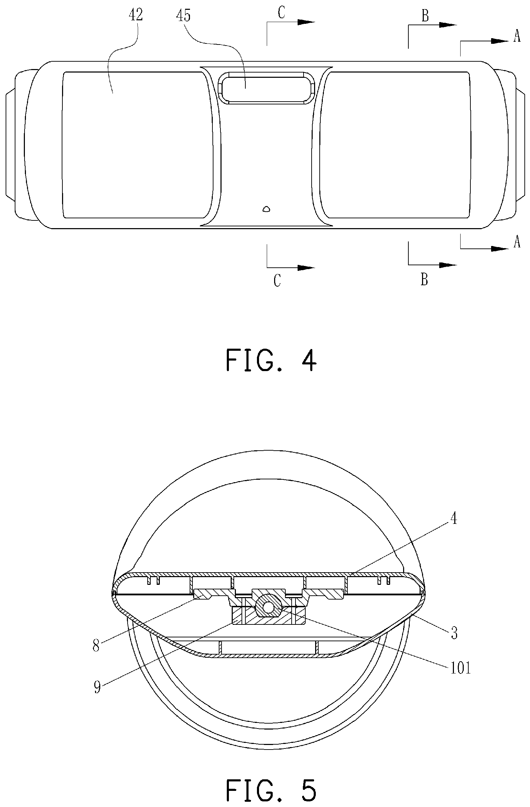

In the embodiment, as shown in FIG. 5, FIG. 6, FIG. 7, and FIG. 9, the wheels 1 adopts the hub motor. Wheel axles 101 of the two wheels 1 are respectively fixed to two ends of the supporting frame 8 through fixing members 9. Further, the wheel axles 101 are mounted below the supporting frame 8 to prevent the fixing members from occupying the space above the supporting frame to increase the height of the vehicle body and affect the configuration of the sensor.

Furthermore, the supporting frame 8 and the fixing members 9 are provided with grooves coordinating with the wheel axles 101, so that the fixing is firmer and more reliable, the mounting is more convenient, and the volume is smaller. In order to facilitate routing, the wheel axle 101 has a tubular structure, and a wire harness passes through a tube hole of the wheel axle. Of course, in other embodiments, the wire harness may also be routed to the outside of the wheel axle. In order to facilitate the firm fixation, a keyway coordinating with the supporting frame 8 or the fixing member 9 is provided on the wheel axle.

In other embodiments, the wheel axles may also be mounted above the supporting frame.

In other embodiments, an axle hole is provided on the supporting frame, and the wheel axle is inserted into the axle hole to be fixed.

Compared with "the structure where one end of the wheel axle is connected to the wheel, another end is connected to a wheel axle fixing plate, and the wheel axle fixing plate is then fixed to the supporting frame of the vehicle body" in the prior art, the mounting structure of the supporting frame and the wheel axle has lower cost, more convenient mounting, and more reliable connection. Also, since the supporting frame with the integral plate-shaped structure is adopted, and the weight of components above the supporting frame is lighter and very close to a wheel axis, while main weight components such as the battery are disposed below the wheel axis, such structure enables the center of gravity of the vehicle body to be much lower than the wheel axis, so that an intermediate component such as the wheel axle fixing plate and a motor fixing seat is no longer required to lower the center of gravity.

In the embodiment, the upper cover 4 of the vehicle body is an integrally formed plastic member and includes left and right pedal portions 42. The two pedal portions 42 are connected through an intermediate portion 41. Outer sides of each of the two pedal portions 42 are provided with a wheel cover portion 43 for covering a respective one of the wheels 1. In this way, the manufacturing cost is low, the integration is good, and the assembly is convenient.

In other embodiments, the pedal portion 42, the intermediate portion 41, and the wheel cover portion 43 may be formed by assembling separate components or formed by integrally forming several portions therein and then assembling with other portions.

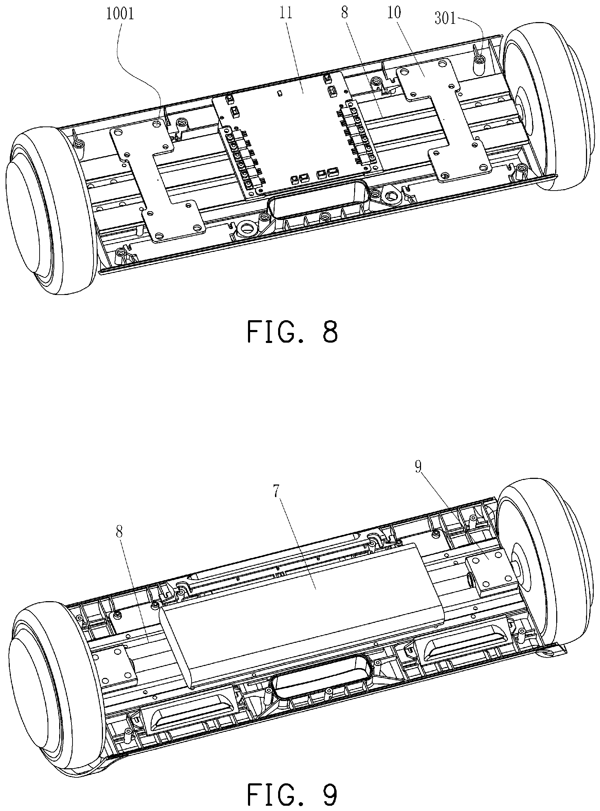

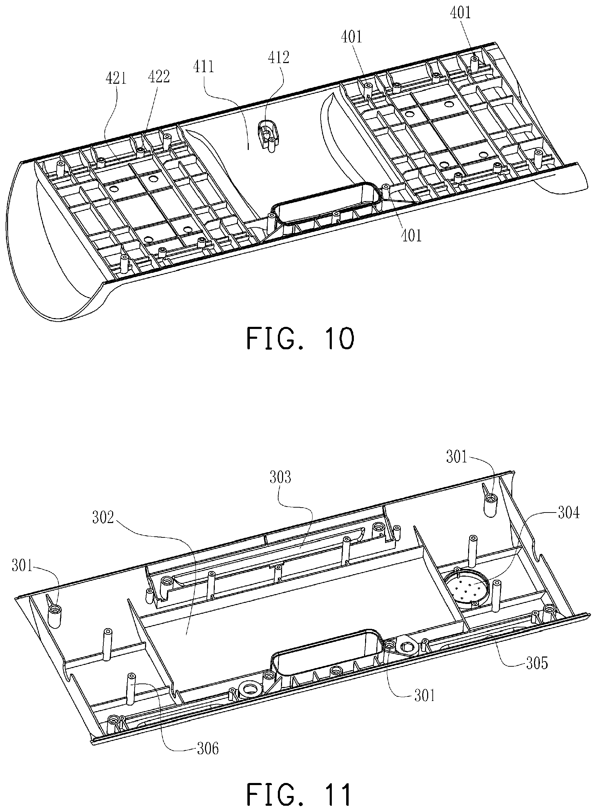

In the embodiment, as shown in FIG. 8 and FIG. 10, the bottom portion of each of the pedal portions 42 is provided with pressure portions 421 and positioning columns 422. The pressure portion 421 is used to contact the pressure sensor 10 to transmit pressure. The positioning column 422 coordinates to position with a positioning hole 1001 on the pressure sensor 10 to ensure the relative position of the pressure sensor 10 and the pedal portion 42 and improve the detection sensitivity of the sensor. Each of a front side and a rear side of the bottom portion of the pedal portion 42 is provided with the two pressure portions 421 (two reinforcing ribs). Each of the front side and the rear side of the bottom portion of the pedal portion 42 is provided with the two positioning columns 422 coordinating with the pressure sensor 10.

In other embodiments, the pressure portion 421 may have one or more of a block shape, a strip shape, a convex shape, a column shape, a cone shape, or other shapes that may transmit an action force.

In other embodiments, a positioning and coordinating structure may not be disposed between the pedal portion 42 and the pressure sensor 10 or any other structure that can implement coordinated limit may be disposed. For example, the positions of the positioning column and the positioning hole may be exchanged, the coordinated limit may be implemented through an edge limiting structure, etc.

In the embodiment, the lower cover 3 of the vehicle body is an integrally formed plastic member. The lower cover 3 is fixed below the supporting frame 8. The upper cover 4 and the lower cover 3 are fixedly connected. The battery 7 is mounted in a battery space 302 of the lower cover 3 below the supporting frame 8. The control board 11 is mounted above the supporting frame 8. In this way, the structure is simple and reasonable, which facilitates the assembly of various components and facilitates wiring and debugging.

In other embodiments, the upper cover 4 may be fixed on the supporting frame 8, and the lower cover 3 and the upper cover 4 may be fixedly connected; or the upper cover 4 and the lower cover 3 may be respectively fixedly connected to the supporting frame 8.

In other embodiments, the battery 7 may also be mounted above the supporting frame 8.

In other embodiments, the control board 11 may also be mounted below the supporting frame 8. Multiple control boards may also be respectively fixed at different positions in the vehicle body.

In the embodiment, the intermediate portion 41 of the upper cover 4 is arched upward to form an intermediate accommodating space 411 thereunder. The control board 11 is accommodated in the intermediate accommodating space 411 and is fixed on the supporting frame 8. In this way, the mounting is convenient, the structure is simple, which facilitates wiring.

In other embodiments, the control board 11 may also be fixed on the intermediate portion 41 of the upper cover 4 or fixed on the lower cover 3.

In the embodiment, the supporting frame 8 is suspended and fixed on the lower cover 3 through multiple fixing columns 306 on the lower cover 3 and is further limited through a rib and/or a column on the upper cover 4 and/or the lower cover 3. The upper and lower fixed connection of the upper cover 4 is implemented through multiple upper connecting columns 401, lower connecting columns 301, and fasteners. The intermediate portion 41 of the upper cover 4 is provided with an indicator light hole 412 for mounting an indicator light 5. The middle of the lower cover 3 is provided with the battery space 302, a left side or a right side is provided with a speaker space 304, a front side of the lower cover 3 is provided with a front light hole 303 for mounting a front light 2, and a rear side of the lower cover 3 is provided with two rear light holes 305 for mounting rear lights 6.

In other embodiments, persons skilled in the art may also perform simple adjustments and conventional replacements on the specific mounting positions and mounting structures of various parts on the basis of the design principle of the embodiment.

In the embodiment, a rear side of the vehicle body is provided with a handle hole 45 penetrating from top to bottom, so that a handle 44 is formed in the middle of the rear side of the vehicle body, which may facilitate the user to transport the vehicle without increasing the volume of the vehicle body, is low cost, and has a firm structure.

In other embodiments, the handle may also be disposed on a front side, a top portion, a bottom portion, or other parts of the vehicle body.

In other embodiments, the handle may be fixed and visible or may be a hidden structure by folding, pulling, etc.

In the embodiment, the left and right wheels are disposed on two sides of the supporting frame. The wheel axles are basically coaxial. The supporting frame is disposed between the upper cover and the lower cover for the functions of fixing the wheels and load-bearing. Each of left and right pedal regions on the supporting frame is provided with the pressure sensor. Each pedal region has at least two sensors for detecting pressure data and detecting front and rear pressure values of two feet. The control board and the battery are respectively disposed between the supporting frame and the upper cover or the supporting frame and the lower cover, and may also be disposed between the supporting frame and the lower cover or between the supporting frame and the upper cover at the same time. The supporting frame adopts a stretching profile or a profile welding process, which ensures the strength and reduces the volume and weight of the supporting frame. The battery adopts a single-layer tiling, which may greatly reduce the thickness of the product, increase the ground clearance, and increase the passability. A handle is disposed at a tail portion for easy transportation.

### Embodiment 2

The only differences from Embodiment 1 are that the supporting frame and the lower cover are integrated, and there is no obvious independent frame-type component. The rest is the same as Embodiment 1. In this way, the function of the supporting frame is implemented by the lower cover or a rigid supporting component in the lower cover.

In an implementation, the entire lower cover is integrally formed from metal or other materials with certain supporting rigidity.

In another implementation, several rigid reinforcing components are disposed in the lower cover. The wheels, the pedal component, and the sensor are connected through the rigid reinforcing components. In this way, the lower cover includes a main frame portion for load-bearing the vehicle body and an appearance portion exposed on an outer surface of the vehicle body. The main frame portion and the appearance portion may be integrally formed by the same material or formed in one stage, formed in stages, or integrally assembled from segregation by adopting different materials. For example, one or more appearance portions are fixed on a portion or the entire exposed surface of the metal main frame portion through bonding, clamping, sleeving, riveting, compounding, fasteners, etc. The appearance portion may be made of various materials such as metal, plastic, rubber, or wood. In this way, the manufacturing cost may be saved, the appearance is diversified, and disadvantages such as high requirements for surface processing, high cost, and unitary appearance of the metal material may be avoided.

The specific description of the embodiment is as follows.

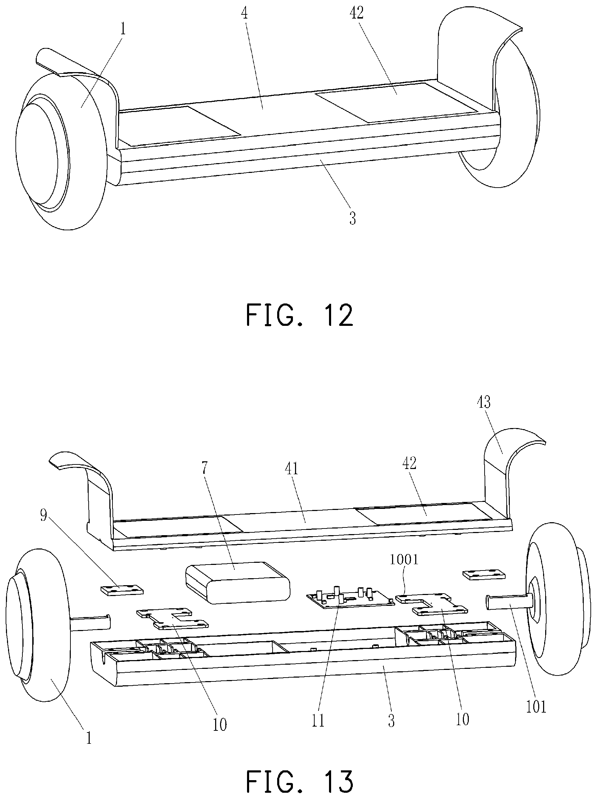

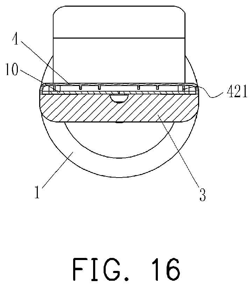

A human-machine interaction somatosensory vehicle as shown in FIG. 12 to FIG. 16 includes the vehicle body and the wheels 1 mounted on the vehicle body. The vehicle body includes the lower cover 3 with supporting rigid, the control board 11, the sensors, the battery 7, and the pedal components. The wheels 1 are mounted on two sides of the lower cover 3. The pedal components are mounted above the lower cover 3. The sensors aer mounted below the pedal components. The battery 7 supplies power to the control board 11. The control board 11 controls the wheels 1 to rotate according to the signal of the sensor.

In other embodiments, there is a better combination between the pedal components and the lower cover 3, and wrapping decorative members such as upper cover or outer cover may not be disposed. However, preferably, for the purpose of decoration and covering and protecting internal parts, in the embodiment, the vehicle body further includes the upper cover 4 covering the lower cover 3. All or a portion of each of the pedal components is disposed on the upper cover 4.

The lower cover 3 with supporting rigidity is used for load-bearing the vehicle body and mounting the wheels. Therefore, the lower cover 3 includes the wheel connecting portion for connecting with the wheels and the supporting portions for supporting the pedal components. The wheel connecting portion and the supporting portions are integrally formed, directly fixedly connected, or indirectly fixedly connected via another rigid component, thereby ensuring that the weight of the user is transmitted to the wheels via the pedal components and the lower cover.

In the embodiment, the wheel connecting portions and the supporting portions of the lower cover 3 are integrally formed. The entire lower cover is integrally formed of metal or other materials with certain supporting rigidity. If steel or aluminum frame structure is adopted, the strength is high and the structure is safe and reliable. If hard plastic that meets strength requirements is adopted, the cost is low and the processing is convenient. In other embodiments, several rigid reinforcing components are provided in the lower cover. The wheels, the pedal component, and the sensor are connected through the rigid reinforcing components to provide rigid support. In this way, the lower cover includes the main frame portion for load-bearing the vehicle body and the appearance portion exposed on the outer surface of the vehicle body to provide protection and decoration.

The pedal components are configured for the user to step on and transmit the weight to the lower cover with supporting rigidity. Each of the pedal components includes at least a pedal part for the user to step on. When the user steps on the pedal part, the pedal part can directly contact the lower cover 3 (or indirectly connect the lower cover through the intermediate component) to transmit the weight to the lower cover 3. The lower cover 3 ultimately bears the weight.

In the embodiment, as shown in FIG. 12 and FIG. 13, the pedal components are the pedal portions 42 that are integrally connected with the upper cover 4 of the vehicle body. Since the upper cover 4 for decoration and protection is generally made of plastic, the pedal portion 42 is also made of plastic, which has a simple structure, convenient assembly, low manufacturing cost, and pleasing appearance. When the user stands on the pedal portion of the upper cover, the weight thereof is transmitted to the sensor and the lower cover through the elastic deformation of the pedal portion 42.

In other embodiments, each of the pedal components may be a pedal baseplate capable of independently moving and generating less relative displacement changes relative to the upper cover of the vehicle body. The pedal baseplate and the upper cover of the vehicle body may be connected and sealed through a flexible component such as a rubber ring, or the pedal bottom portion and the upper cover of the vehicle body may be integrally connected through a flexible joint through a processing manner such as secondary forming, multiple forming, or insert injection.

In the embodiment, an anti-slip sticker or an anti-slip mat is disposed on the upper surface of each of the pedal portions 42. The anti-slip sticker or the anti-slip mat is fixed on each of the pedal portions 42 by pasting, which is convenient for mounting or replacement and low cost.

In other embodiments, an anti-slip structure (such as an anti-slip pattern) or an anti-slip component may also be disposed on the pedal components (the pedal portions 42) through forming processing, covering assembly, etc. The anti-slip component (such as the anti-slip sticker or the anti-slip mat) may be made of soft rubber or other materials to increase the wear resistance and friction of the pedal component, improve user comfort, and provide better waterproof and dustproof effects.

The sensor is used to sense changes in posture of the user to know the vehicle operation intention thereof. The sensor may be a pressure sensor, a capacitive sensor, a photoelectric sensor, and other sensors that can detect slight changes in shape or displacement of an object. The sensor includes a portion that can be connected with the pedal component, another portion that can be connected with the supporting component, and a signal output portion that is connected with the control board. The application principle and specific structure of such sensor on a somatosensory vehicle (or a balance vehicle) may be any of the solutions disclosed in the patent documents with publication numbers CN108297999A, CN106627895A, CN108725648A, CN106560386A, CN105416486A, etc. and the series of application documents thereof, and any other sensor that can achieve the above detection purpose.

In the embodiment, each of the sensors is a plate-shaped or sheet-shaped pressure sensor 10. The pressure sensor 10 is disposed between each of the pedal components (the pedal portions 42) and the lower cover 3. A force-sensitive component of the pressure sensor 10 bears the weight while sensing changes in pressure. In this way, the cost is low, the thickness is thin, and the height of the vehicle body and the center of gravity of the vehicle body can be lowered to the greatest extent.

In other embodiments, the sensor may also only sense changes in shape or displacement of the pedal component or other intermediate components after bearing the weight, so that the sensor may be disposed at any suitable position around the pedal component.

In the embodiment, the pressure sensors 10 are fixed on the lower cover 3, so that the mounting is convenient and the detection is sensitive and reliable.

In other embodiments, the sensor may be mounted on each of the pedal components (such as the bottom portion of each of the pedal portions 42). The sensors may also be partially mounted on the pedal components and partially mounted on the lower cover 3. Persons skilled in the art may make reasonable arrangements according to the type and functional principle of the sensor.

In the embodiment, as shown in FIG. 13, FIG. 15, and FIG. 16, there are pressure sensors 10 disposed below the left and right pedal portions 42. Each pressure sensor 10 includes the front and rear end portions and the connecting portion connecting the two end portions. The front and rear end portions are suspended without any support below. The connecting portion is fixedly connected with a raised reinforcing rib on the lower cover 3, or when compressed, the connecting portion is supported and limited by the raised reinforcing rib on the lower cover 3, so that the front and rear end portions may respectively sense different pressure information according to the different forces of the front and rear soles. In other words, the front and rear sensing regions are equivalent to two sensors at different positions to respectively test the different forces of the front and rear soles. In other embodiments, each pressure sensor may also sense slight deformation or displacement of the pedal component relative to the lower cover entirely. In other embodiments, each pressure sensor may have only one sensing region or more than two sensing regions.

The control device of the somatosensory vehicle is used for controlling and driving the two wheels to move or rotate according to differences in force information between the sensing regions of the two pressure sensors, so as to implement steering. In other embodiments, the pressure sensors may also be used to sense whether there is a user on the pedal components, so as to control the start and stop of the wheels. With such arrangement, there is no need to separately configure a sensing switch, thereby simplifying the structure of the vehicle body. Of course, in other embodiments, the sensing switch may also be separately configured.

The human-machine interaction somatosensory vehicle may further include a position sensor (not shown) for sensing tilt information of the vehicle body relative to the ground. With such arrangement, when the user and the vehicle body are tilted forward, the position sensor senses the tilt and sends a signal to the control board. The control board controls and drives the wheels to move forward, which enables the entirety to tilt backward under the action of inertia to balance. Specifically, the position sensor includes a gyroscope, an acceleration sensor, and/or a photoelectric sensor.

The wheels are used for load-bearing and driving the vehicle body to move through being driven to rotate. The wheels may be mounted on two sides of the lower cover with supporting rigidity. A driving implementation of the wheels may be driven to rotate by an external motor, that is, the wheel includes the wheel frame and the wheel axle that are fixedly connected. The wheel axle is rotatably mounted on the lower cover 3 and is transmission connected with the drive motor fixed on the lower cover 3. In the prior art, the use of the external motor on the wheels causes the structure of the vehicle body to be complex and bulky. However, in the embodiment, since the lower cover with supporting rigidity and the pressure sensor control structure are adopted, the parts of the entire vehicle are greatly reduced and the internal space of the vehicle body has more space, so that the drive motor of the wheels may be reasonably arranged. In another driving implementation of the wheels, the wheels are driven to rotate by a built-in motor, that is, the hub motor is adopted. The wheel frames and the wheel axles of the wheels are driven through the hub motor to implement relative rotation, so that the wheel axles may be directly fixed on the lower cover with supporting rigidity, which has a simple and reasonable structure, may be conveniently and quickly mounted, occupies less internal space of the vehicle body, and has low manufacturing cost.

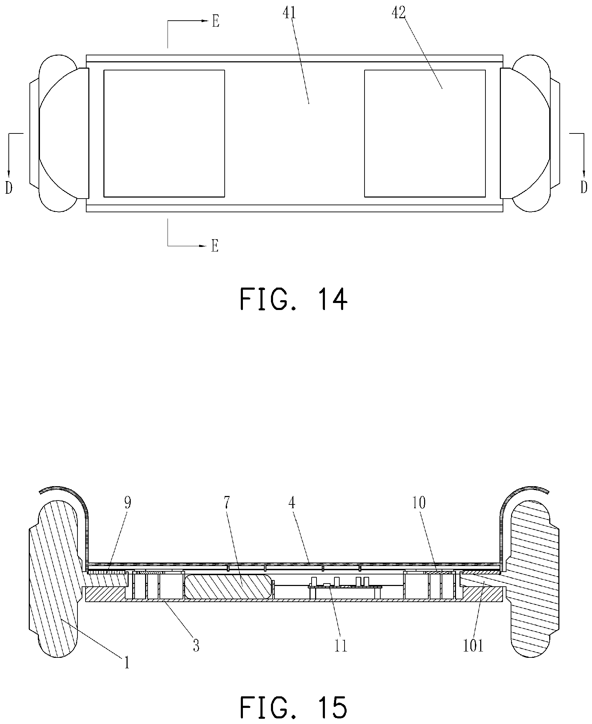

In the embodiment, as shown in FIG. 13 and FIG. 15, the wheels 1 adopt the hub motor. The wheel axles 101 of the two wheels 1 are respectively fixed to two ends of the lower cover 3 through the fixing members 9.

Furthermore, the lower cover 3 and the fixing members 9 are provided with grooves coordinating with the wheel axles 101, so that the fixing is firmer and more reliable, the mounting is more convenient, and the volume is smaller. In order to facilitate routing, the wheel axle 101 has a tubular structure, and a wire harness passes through the tube hole of the wheel axle. Of course, in other embodiments, the wire harness may also be routed to the outside of the wheel axle. In order to facilitate the firm fixation, a keyway coordinating with the lower cover 3 or the fixing member 9 is provided on the wheel axle.

Compared with "the structure where one end of the wheel axle is connected to the wheel, another end is connected to the wheel axle fixing plate, and the wheel axle fixing plate is then fixed to the supporting frame of the vehicle body" in the prior art, the mounting structure of the lower cover with supporting rigidity and the wheel axle has lower cost, more convenient mounting, and more reliable connection. Also, since the lower cover with supporting rigidity is adopted, and the weight of components above is lighter and very close to the wheel axis, while main weight components such as the battery are disposed below the wheel axis, such structure enables the center of gravity of the vehicle body to be much lower than the wheel axis, so that the intermediate component such as the wheel axle fixing plate and the motor fixing seat is no longer required to lower the center of gravity, the structure is simple, and the operation is stable.

In the embodiment, the upper cover 4 of the vehicle body is an integrally formed plastic member and includes the left and right pedal portions 42. The two pedal portions 42 are connected through the intermediate portion 41. The outer sides of each of the two pedal portions 42 are provided with the wheel cover portion 43 for covering a respective one of the wheels 1. In this way, the manufacturing cost is low, the integration is good, and the assembly is convenient.

In other embodiments, the pedal portions 42, the intermediate portion 41, and the wheel cover portions 43 may be formed by assembling separate components or formed by integrally forming several portions therein and then assembling with other portions.

In the embodiment, the bottom portion of each of the pedal portions 42 is provided with the pressure portion and the positioning column. The pressure portion is used to contact the pressure sensor 10 to transmit pressure. The positioning column coordinates to position with the positioning hole 1001 on the pressure sensor 10 to ensure the relative position of the pressure sensor 10 and the pedal portion 42 and improve the detection sensitivity of the sensor.

In other embodiments, the pressure portion may have one or more of a block shape, a strip shape, a convex shape, a column shape, a cone shape, or other shapes that may transmit an action force.

In other embodiments, the positioning and coordinating structure may not be disposed between the pedal portion 42 and the pressure sensor 10 or any other structure that can implement coordinated limit may be disposed. For example, the positions of the positioning column and the positioning hole may be exchanged, the coordinated limit may be implemented through the edge limiting structure, etc.

In the embodiment, the upper cover 4 and the lower cover 3 are fixedly connected. The battery 7 is mounted in the battery space of the lower cover 3. The control board 11 is mounted in a cavity of the lower cover 3. The lower cover 3 is provided with multiple vertically and horizontally staggered reinforcing ribs below each of the pressure sensors 10 and/or each of the fixing members 9 to support and fix the pressure sensors 10 and the wheel axles 101. In this way, the structure is simple and reasonable, the support is firm and reliable, the assembly of various components is convenient, and the wiring debugging is also convenient.

In other embodiments, multiple control boards may also be disposed. The control boards may also be respectively fixed at different positions of the lower cover 3.

In other embodiments, persons skilled in the art may also perform simple adjustments and conventional replacements on the specific mounting positions and mounting structures of various parts on the basis of the design principle of the embodiment.

In the embodiment, the left and right wheels are disposed on two sides of the lower cover with supporting rigidity. The wheel axles are basically coaxial. The lower cover is used for the functions of fixing the wheels and load-bearing. Each of the left and right pedal regions is provided with the pressure sensor. Each pedal region has at least two sensors for detecting pressure data and detecting the front and rear pressure values of the two feet. The lower cover adopts a stretching profile, profile welding, or insert injection, which ensures the strength and reduces the volume and weight of the vehicle body. The battery adopts a single-layer tiling, which may greatly reduce the thickness of the product, increase the ground clearance, and increase the passability.

In summary, in the prior art, the upper cover or the supporting frame for configuring the pedal components is also a load-bearing component, which results in higher center of gravity of the somatosensory vehicle, a complex structure of the pedal device, many parts, high manufacturing cost, large volume, and heavy weight.

In the disclosure, the independent internal supporting frame or the supporting frame integrated with the lower cover is adopted. The upper cover is no longer used as a load-bearing component. The upper cover of the vehicle body may be made of a material with lower cost, light weight, and better decorative effect, such as a plastic material. Also, the center of gravity of the vehicle body is lowered, the structure is simplified, the number of parts is greatly reduced, and the manufacturing cost is greatly reduced, the platform of the vehicle body is thinner to increase the ground clearance, the passability is improved, and the vehicle body is reduced in size, lighter, and easier to be carried and transported. Under the premise of meeting the functional requirements of the human-computer interaction somatosensory vehicle, the product structure is optimized and the product production cost is reduced.

In the description of the specification, descriptions with reference to terms such as "an embodiment", "some embodiments", "an example", "a specific example", or "some examples" indicate that specific features, structures, materials, or characteristics described in conjunction with the embodiment or the example are included in at least one embodiment or example of the disclosure. In the specification, the schematic representations of the above terms do not necessarily refer to the same embodiment or example. Moreover, the described specific features, structures, materials, or characteristics may be combined in any one or more embodiments or examples in a suitable manner.

Although the embodiments of the disclosure have been shown and described above, it can be understood that the above embodiments are exemplary and should not be construed as limiting the disclosure. Persons skilled in the art may make changes, modifications, replacements, and modifications to the above embodiments within the scope of the disclosure without departing from the principle and objective of the disclosure. Any modification, equivalent replacement, improvement, etc. made within the spirit and principle of the disclosure should be included in the protection scope of the disclosure.

## Claims

1. A human-machine interaction somatosensory vehicle, comprising a vehicle body and wheels (1) mounted on the vehicle body, **characterized in that** the vehicle body comprises a supporting frame (8), a control board (11), sensors, a battery (7), and pedal components, the wheels (1) are mounted on the supporting frame (8), the pedal components are mounted above the supporting frame (8), the sensors are respectively mounted below the pedal components, the battery (7) supplies power to the control board (11), and the control board (11) controls the wheels (1) to rotate according to signals of the sensors.

2. The human-machine interaction somatosensory vehicle according to claim 1, **characterized in that** the vehicle body further comprises an upper cover (4) and a lower cover (3) wrapped outside; and the pedal components are plastic members integrally formed with the upper cover (4) of the vehicle body.

3. The human-machine interaction somatosensory vehicle according to claim 1, **characterized in that** the supporting frame (8) comprises a wheel connecting portion for connecting with the wheels and supporting portions for supporting the pedal components, and the wheel connecting portion and the supporting portions are integrally formed, or directly fixedly connected, or indirectly fixedly connected via another rigid component.

4. The human-machine interaction somatosensory vehicle according to claim 1, **characterized in that** the supporting frame (8) is an integrally formed plate-shaped structure; and the supporting frame (8) is made of an aluminum profile.

5. The human-machine interaction somatosensory vehicle according to claim 1, **characterized in that** the pedal components are pedal portions (42) integrally connected with an upper cover (4) of the vehicle body.

6. The human-machine interaction somatosensory vehicle according to claim 1, **characterized in that** each of the pedal components is a pedal baseplate capable of independently moving and generating relative displacement changes relative to the supporting frame (8) and an upper cover (4) of the vehicle body, and the pedal baseplate and the upper cover (4) of the vehicle body are able to be connected through a flexible component or a flexible joint.

7. The human-machine interaction somatosensory vehicle according to claim 1, **characterized in that** an upper surface of each of the pedal components is adhered with an anti-slip sticker or an anti-slip mat.

8. The human-machine interaction somatosensory vehicle according to claim 1, **characterized in that** each sensor is a plate-shaped or sheet-shaped pressure sensor (10), and the pressure sensor (10) is disposed between the pedal component and the supporting frame (8); and the pressure sensor (10) comprises front and rear end portions and a connecting portion connecting the front and rear end portions, and the connecting portion is fixed on the supporting frame (8) or to a bottom portion of the pedal component.

9. The human-machine interaction somatosensory vehicle according to claim 1, **characterized in that** the wheels (1) adopt a hub motor, and wheel axles (101) of the two wheels (1) are respectively fixed to two ends of the supporting frame (8) through fixing members (9); and the wheel axles (101) are mounted below the supporting frame (8), and the supporting frame (8) and the fixing members (9) are provided with grooves coordinating with the wheel axles (101).

10. The human-machine interaction somatosensory vehicle according to claim 1, **characterized in that** an upper cover (4) of the vehicle body is an integrally formed plastic member and includes left and right pedal portions (42), the left and right pedal portions (42) are connected through an intermediate portion (41), and outer sides of the left and right pedal portions (42) are respectively provided wheel cover portions (43) for covering the wheels (1).

11. The human-machine interaction somatosensory vehicle according to claim 10, **characterized in that** each of a front side and a rear side of a bottom portion of each of the pedal portions (42) is provided with two pressure portions (421) in contact with pressure sensors (10) to transmit pressure, and each of the front side and the rear side of the bottom portion of each of the pedal portions (42) is provided with two positioning columns (422) coordinating with the pressure sensors (10).

12. The human-machine interaction somatosensory vehicle according to claim 1, **characterized in that** a lower cover (3) of the vehicle body is an integrally formed plastic member, the lower cover (3) is fixed below the supporting frame (8), an upper cover (4) and the lower cover (3) are fixedly connected, the battery (7) is mounted in a battery space (302) of the lower cover (3) below the supporting frame (8), and the control board (11) is mounted above the supporting frame (8).

13. The human-machine interaction somatosensory vehicle according to claim 1, **characterized in that** an upper cover (4) is fixed on the supporting frame (8), and a lower cover (3) and the upper cover (4) are fixedly connected; or the upper cover (4) and the lower cover (3) are respectively fixedly connected to the supporting frame (8).

14. The human-machine interaction somatosensory vehicle according to claim 1, **characterized in that** the battery (7) is mounted between the supporting frame (8) and a lower cover (3), or the battery (7) is mounted between the supporting frame (8) and an upper cover (4); and the control board (11) is mounted between the supporting frame (8) and the lower cover (3), or the control board (11) is mounted between the supporting frame (8) and the upper cover (4).

15. The human-machine interaction somatosensory vehicle according to claim 1, **characterized in that** an intermediate portion (41) of an upper cover (4) is arched upward to form an intermediate accommodating space (411) thereunder, and the control board (11) is accommodated in the intermediate accommodating space (411) and is fixed on the supporting frame (8).

16. The human-machine interaction somatosensory vehicle according to claim 1, **characterized in that** a front side or a rear side of the vehicle body is provided with a handle hole (45) penetrating from top to bottom, such that a handle (44) is formed in a middle of the front side or the rear side of the vehicle body.

17. The human-machine interaction somatosensory vehicle according to claim 1, **characterized in that** the supporting frame is integrated with a lower cover.

18. The human-machine interaction somatosensory vehicle according to claim 1, **characterized in that** the left and right wheels (1) are mounted on left and right ends of the supporting frame (8), the left and right pedal components are mounted above the supporting frame (8), the battery (7) is mounted below the supporting frame (8), the left and right sensors are respectively mounted below the left and right pedal components, the battery (7) supplies power to the control board (11), the control board (11) is mounted with a gyroscope, and the control board (11) controls the two wheels to rotate (1) according to the signals of the two sensors.

19. The human-machine interaction somatosensory vehicle according to claim 18, **characterized in that** the supporting frame (8) is an integrally formed plate-shaped structure; and the supporting frame (8) is made of an aluminum profile.

20. The human-machine interaction somatosensory vehicle according to claim 19, **characterized in that** the supporting frame (8) comprises a wheel connecting portion for connecting with the wheels and supporting portions for supporting the pedal components, the wheel connecting portion and the supporting portions are integrally formed or fixedly connected to form a supporting frame; left and right ends of the supporting frame are respectively provided with the wheel connecting portion, the left and right wheel connecting portions have a common wheel axis, the left and right supporting portions are disposed between the two wheel connecting portions, and each sensor is a plate-shaped or sheet-shaped pressure sensor (10) disposed between each of the supporting portions and a respective one of the pedal components.

21. The human-machine interaction somatosensory vehicle according to claim 20, **characterized in that** the pressure sensor (10) comprises integrally formed or fixedly connected front and rear end portions and a connecting portion between the front and rear end portions, the connecting portion is fixed on the supporting frame (8), and the front and rear end portions are suspended.

22. The supporting frame of the human-machine interaction somatosensory vehicle according to claim 21, **characterized in that** the front and rear end portions of the pressure sensor (10) form front and rear pressure sensing regions that are relatively independent from each other.

23. The supporting frame of the human-machine interaction somatosensory vehicle according to claim 21, **characterized in that** the suspended front and rear end portions of the pressure sensor (10) are respectively located on front and rear sides of the wheel axis of the two wheel connecting portions.

24. A human-machine interaction somatosensory vehicle, comprising a vehicle body and wheels (1) mounted on the vehicle body, **characterized in that** the vehicle body comprises a lower cover, a control board (11), sensors, a battery (7), and pedal components, the wheels (1) are mounted on the lower cover, the pedal components are mounted above the lower cover, the sensors are mounted below the pedal components, the battery (7) supplies power to the control board (11), and the control board (11) controls the wheels to rotate according to signals from the sensors.

25. The human-computer interaction somatosensory vehicle according to claim 24, **characterized in that** the lower cover is integrally formed by metal or other materials with supporting rigidity; or the lower cover comprises a main frame portion for load-bearing the vehicle body and an appearance portion exposed on an outer surface of the vehicle body, and the main frame portion and the appearance portion are integrally formed by a same material or formed in one stage, formed in stages, or integrally assembled from segregation by adopting different materials; and each of the pedal components is a plastic member integrally formed with an upper cover (4) of the vehicle body or a pedal baseplate capable of independently moving and generating relative displacement changes relative to the supporting frame (8) and the upper cover (4) of the vehicle body.

26. An upper cover of a human-machine interaction somatosensory vehicle, the upper cover being provided with left and right pedal components, **characterized in that** a supporting frame (8) is disposed under the two pedal components, a sensor is disposed between each of the pedal components and the supporting frame (8), each of the pedal components comprises a pedal part for a user to step on, and when the pedal part bears a weight, the pedal part transmits weight to the supporting frame and triggers the sensor below the pedal part to generate an electrical signal.

27. The upper cover of the human-machine interaction somatosensory vehicle according to claim 26, **characterized in that** the upper cover (4) is fixed on the supporting frame (8).

28. The upper cover of the human-machine interaction somatosensory vehicle according to claim 26, **characterized in that** each of the pedal components is a plastic member integrally formed with the upper cover (4).

29. The upper cover of the human-machine interaction somatosensory vehicle according to claim 26, **characterized in that** each of the pedal components is a pedal baseplate capable of independently moving and generating relative displacement changes relative to the supporting frame (8) and the upper cover (4), the pedal baseplate and the upper cover (4) are able to be connected through a flexible component or a flexible joint.

30. The upper cover of the human-machine interaction somatosensory vehicle according to claim 26, **characterized in that** an upper surface of each of the pedal components is adhered with an anti-slip sticker or an anti-slip mat.

31. The upper cover of the human-machine interaction somatosensory vehicle according to claim 26, **characterized in that** the upper cover (4) is an integrally formed plastic member and includes left and right pedal portions (42), the left and right pedal portions (42) are connected through an intermediate portion (41), and the pedal portions (42) are the pedal components.

32. The upper cover of the human-machine interaction somatosensory vehicle according to claim 31, **characterized in that** outer sides of the two pedal portions (42) are respectively provided with wheel cover portions (43) for covering the wheels (1).

33. The upper cover of the human-machine interaction somatosensory vehicle according to claim 26, **characterized in that** each of the sensors is a plate-shaped or sheet-shaped pressure sensor (10), the pressure sensor (10) comprises front and rear end portions and a connecting portion connecting the front and rear end portions, and the connecting portion is fixed on the supporting frame (8) or to a bottom portion of the pedal component; and the front and rear end portions of the pressure sensor (10) form relatively independent front and rear pressure sensing regions.

34. The upper cover of the human-machine interaction somatosensory vehicle according to claim 33, **characterized in that** the wheel is respectively mounted at left and right ends of the supporting frame, the left and right wheels have a common wheel axis, and suspended front and rear end portions of the pressure sensor (10) are respectively located on front and rear sides of the wheel axis of the two wheel connecting portions; each of a front side and a rear side of a bottom portion of each pedal portion (42) is provided with two pressure portions (421) in contact with the pressure sensor (10) to transmit pressure, the front and rear pressure portions (421) are respectively correspond to the front and rear end portions of the pressure sensor (10), and the front side and the rear side of the bottom portion of each pedal portion (42) are respectively provided with a limiting structure coordinating with the front and rear end portions of the pressure sensor (10).

35. The upper cover of the human-machine interaction somatosensory vehicle according to claim 34, **characterized in that** each of the pressure portions (421) has a block shape, a strip shape, a convex shape, a column shape, or a cone shape.

36. The upper cover of the human-machine interaction somatosensory vehicle according to claim 34, **characterized in that** the limiting structure is a positioning column, a positioning hole, or an edge limiting structure.

37. A human-machine interaction somatosensory vehicle, **characterized by** comprising the upper cover of the human-machine interaction somatosensory vehicle according to any one of claims 26 to 36.

38. The human-machine interaction somatosensory vehicle according to claim 37, **characterized by** further comprising wheels (1), a control board (11), a battery (7), and pedal components, wherein the wheels (1) are mounted on a wheel connecting portion at left and right ends of the supporting frame (8), the control board (11) is fixed on the supporting frame (8), the pressure sensor (10) is connected to the control board (11), the control board (11) is mounted with a gyroscope, and the control board (11) controls the wheels (1) to rotate according to the signals of the sensors; and the battery (7) is mounted below the supporting frame (8), and the pedal components are mounted above the supporting frame (8).

39. A supporting frame of a human-machine interaction somatosensory vehicle, **characterized by** comprising a wheel connecting portion for connecting with wheels and supporting portions for supporting pedal components, wherein the wheel connecting portion and the supporting portions are integrally formed or fixedly connected to form a supporting frame; left and right ends of the supporting frame are respectively provided with the wheel connecting portion, the wheels respectively connected to the left and right wheel connecting portions have a common wheel axis, the left and right supporting portions are disposed between the two wheels, and a plate-shaped or sheet-shaped pressure sensor (10) is provided between each of the supporting portions and a respective one of the pedal components.

40. The supporting frame of the human-machine interaction somatosensory vehicle according to claim 39, **characterized in that** the supporting frame (8) is an integrally formed plate-shaped structure.

41. The supporting frame of the human-machine interaction somatosensory vehicle according to claim 40, **characterized in that** the supporting frame (8) is made of an aluminum profile.

42. The supporting frame of the human-machine interaction somatosensory vehicle according to claim 39, **characterized in that** the pressure sensor (10) comprises integrally formed or fixedly connected front and rear end portions and a connecting portion between the front and rear end portions, the connecting portion is fixed on the supporting frame (8), and the front and rear end portions are suspended.

43. The supporting frame of the human-machine interaction somatosensory vehicle according to claim 42, **characterized in that** the front and rear end portions of the pressure sensor (10) form front and rear pressure sensing regions that are relatively independent from each other.

44. The supporting frame of the human-machine interaction somatosensory vehicle according to claim 43, **characterized in that** the suspended front and rear end portions of the pressure sensor (10) are respectively located on front and rear sides of the wheel axis of the two wheel connecting portions.

45. The supporting frame of the human-machine interaction somatosensory vehicle according to claim 39, **characterized in that** wheel axles (101) of the wheels (1) are fixed through fixing members (9) on the wheel connecting portions at the two ends of the supporting frame (8), the wheel connecting portions of the supporting frame (8) are provided with grooves coordinating with the wheel axles (101).

46. A human-machine interaction somatosensory vehicle, **characterized by** comprising the supporting frame of the human-machine interaction somatosensory vehicle according to any one of claims 39 to 45.

47. The human-machine interaction somatosensory vehicle according to claim 46, **characterized by** further comprising wheels (1), a control board (11), a battery (7), and a pedal component, wherein the wheels (1) are mounted on wheel connecting portions at left and right ends of the supporting frame (8), the control board (11) is fixed on the supporting frame (8), the pressure sensor (10) is connected to the control board (11), and the control board (11) is mounted with a gyroscope, and the control board (11) controls the wheels (1) to rotate according to a signal of the sensor.

48. The human-machine interaction somatosensory vehicle according to claim 47, **characterized in that** the battery (7) is mounted below the supporting frame (8), and the pedal components are mounted above the supporting frame (8).

49. A vehicle body of a human-machine interaction somatosensory vehicle, **characterized by** the vehicle body comprising a lower cover, a control board (11), sensors, a battery (7), and pedal components, wherein the wheels (1) are mounted on the lower cover, the pedal components are mounted above the lower cover, the sensors are mounted below the pedal components, the battery (7) supplies power to the control board (11), and the control board (11) controls the wheels (1) mounted on the vehicle body to rotate according to signals of the sensors.

50. The vehicle body of the human-machine interaction somatosensory vehicle according to claim 49, **characterized in that** the lower cover is integrally formed by metal or other materials with supporting rigidity.

51. The vehicle body of the human-machine interaction somatosensory vehicle according to claim 49, **characterized in that** the lower cover comprises a main frame portion for load-bearing the vehicle body and an appearance portion exposed on an outer surface of the vehicle body, and the main frame portion and the appearance portion are integrally formed by a same material or formed in one stage, formed in stages, or integrally assembled from segregation by adopting different materials.

52. The vehicle body of the human-machine interaction somatosensory vehicle according to claim 49, **characterized in that** the vehicle body further comprises an upper cover (4) fixed on the lower cover (3), the control board (11), the sensors, and the battery (7) mounted between the upper cover (4) and the lower cover (3).

53. The vehicle body of the human-machine interaction somatosensory vehicle according to claim 52, **characterized in that** the pedal component is a plastic member integrated with the upper cover (4) or a pedal baseplate capable of independently moving and generating relative displacement changes relative to the upper cover (4).

54. The vehicle body of the human-machine interaction somatosensory vehicle according to claim 49, **characterized in that** the lower cover (3) comprises a wheel connecting portion for connecting with the wheels and supporting portions for supporting the pedal components, and the wheel connecting portion and the supporting portions are integrally formed, or directly fixedly connected, or indirectly fixedly connected via another rigid component.

55. The vehicle body of the human-machine interaction somatosensory vehicle according to claim 49, **characterized in that** the wheels (1) adopt a hub motor, and wheel axles (101) of the two wheels (1) are respectively fixed on the lower cover (3) through fixing members (9); and the lower cover (3) and the fixing members (9) are provided with grooves coordinating with the wheel axles (101).

56. The vehicle body of the human-machine interaction somatosensory vehicle according to claim 49, **characterized in that** each sensor is a plate-shaped or sheet-shaped pressure sensor (10), and the pressure sensor (10) is disposed between each of the pedal components and the lower cover (3); and the pressure sensor (10) comprises front and rear end portions and a connecting portion connecting the front and rear end portions, the front and rear end portions are suspended, and the connecting portion is fixed on the lower cover (3) or is supported and limited by a protrusion on the lower cover (3).

57. The vehicle body of the human-machine interaction somatosensory vehicle according to claim 56, **characterized in that** an upper cover (4) of the vehicle body is an integrally formed plastic member and includes left and right pedal portions (42), the left and right pedal portions (42) are connected through an intermediate portion (41), and outer sides of the left and right pedal portions (42) are respectively provided with wheel cover portions (43) for covering the wheels (1).

58. The vehicle body of the human-machine interaction somatosensory vehicle according to claim 57, **characterized in that** each of a front side and a rear side of a bottom portion of each pedal portion (42) is provided with two pressure portions (421) in contact with the pressure sensor (10) to transmit pressure, the bottom portion of each pedal portion (42) is positioned to coordinate with the pressure sensor (10).

59. A human-machine interaction somatosensory vehicle, **characterized by** comprising the vehicle body of the human-machine interaction somatosensory vehicle according to any one of claims 49 to 58.
